# FASCICULE DE BREVET EUROPEEN

(11) **EP 3 758 970 B1**
(45) Date de publication et mention de la délivrance du brevet: **18.05.2022**
(21) Numéro de dépôt: 19711985.2
(22) Date de dépôt: 25.02.2019
(51) Int. Cl.: B60L 5/42, B60L 53/12, B60L 53/30, B60L 53/34

(54) **DISPOSITIF VOLANT**
FLUGVORRICHTUNG
FLYING DEVICE

(30) Priorité: 27.02.2018 FR 1851741
(43) Date de publication de la demande: 06.01.2021
(73) Titulaire: Commissariat à l'énergie atomique et aux énergies alternatives, 75015 Paris (FR)
(72) Inventeur: BERANGER, Bruno, 38054 GRENOBLE CEDEX 09 (FR); CHATROUX, Daniel, 38054 GRENOBLE CEDEX 09 (FR); GERARD, Mathias, 38054 GRENOBLE CEDEX 09 (FR)
(74) Mandataire: Brevalex
(86) Numéro de dépôt international: PCT/FR2019/050421
(87) Numéro de publication internationale: WO 2019/166724

(56) Documents cités:
- WO-A1-2016/103264
- CN-A- 105 882 990
- US-A1- 2016 137 311
- US-A1- 2017 015 414
- US-B1- 7 318 564
- US-B1- 7 714 536
- US-B1- 9 421 869
- Anonymous: "MIT teaches a drone to perch on power lines so it can recharge during flight - Geek.com", , 23 juin 2014 (2014-06-23), XP055523524, Extrait de l'Internet: URL:https://www.geek.com/chips/mit-teaches -a-drone-to-perch-on-power-lines-so-it-can -recharge-during-flight-1597462/ [extrait le 2018-11-13]

## Description

### DOMAINE TECHNIQUE

La présente invention concerne un dispositif volant à propulsion électrique. En particulier, la présente invention concerne un dispositif volant à propulsion électrique pourvu de moyen de couplage mécanique permettant de maintenir ledit dispositif sur un câble d'une ligne de distribution électrique. En particulier, le moyen de couplage mécanique est mis en œuvre pour mettre le dispositif volant dans une position de repos et à l'abris du vandalisme.

Le dispositif volant comprend également un système de recharge de sa batterie embarquée. Le système de recharge est, à cet égard, agencé pour prélever l'énergie nécessaire à la recharge de la batterie au niveau d'une ligne de distribution électrique afin de recharger la batterie.

La présente invention concerne notamment des objets volants de type drone, destinés à la surveillance de lignes de distribution électrique telles que des lignes haute tension. Elle permet d'envisager notamment une gestion de l'autonomie de ces objets volants ainsi qu'une mise en sécurité lorsqu'ils ne volent pas.

### ART ANTÉRIEUR

La recharge d'une batterie rechargeable d'un équipement, notamment une batterie Li-ion, met en œuvre un système de charge destiné à injecter un courant de charge électrique inverse au sens d'utilisation.

Le système de charge peut impliquer un générateur de courant qui, lorsqu'il est électriquement connecté à la batterie rechargeable, débite un courant de charge dans ladite batterie.

Un système de charge par induction (donc nécessitant la génération d'une haute fréquence) pour la charge de la batterie rechargeable est proposé dans le document CN 103872795.

De manière alternative, la charge de la batterie rechargeable peut être exécutée par induction magnétique (CN103872795). A cet égard, un système de charge par induction magnétique comprend un premier bobinage magnétiquement couplé à un second bobinage de sorte que la circulation d'un courant alternatif dans l'un ou l'autre des premier et second bobinages génère la circulation d'un autre courant alternatif dans l'autre bobinage, et qui est destiné à être injecté dans la batterie rechargeable.

Selon un agencement particulier connu de l'état de la technique, le premier bobinage peut être compris dans une base, et alimenté par une source de courant alternatif, tandis que le second bobinage, connecté à la batterie rechargeable, peut être compris dans l'équipement. L'équipement et la base peuvent notamment comprendre des moyens de coopération destinés à permettre le couplage magnétique entre les premier et second bobinages lors d'une phase de charge de la batterie. En particulier, les moyens de couplage magnétique peuvent être agencés pour mettre le premier bobinage à proximité du second bobinage. Pour minimiser la taille des bobinages le courant alternatif est préférentiellement d'une haute fréquence supérieure à 20 kHz pour que les vibrations des bobinages ne soient pas audibles. Dans le cadre de cet art antérieur, une électronique permet de gérer l'alimentation du premier bobinage si le second bobinage est présent.

Ainsi, cet agencement, dans la mesure où il ne nécessite pas l'établissement de connexions électriques entre la base et l'équipement, peut être avantageusement mis en œuvre pour la recharge de batteries d'équipements électroportatifs, de téléphones portables, de brosses à dents électriques ou encore de véhicules électriques.

Toutefois, dès lors qu'il s'agit d'équipements itinérants sur de longues distances, notamment des dispositifs volant à propulsion électrique pour la surveillance des lignes de distribution électrique, cet agencement connu de l'état de la technique n'est pas satisfaisant.

En effet, lors d'un vol de surveillance d'une ligne de distribution électrique, notamment une ligne haute tension, le dispositif volant peut avoir à parcourir une distance importante.

L'autonomie limitée des batteries rechargeables impose cependant de recharger ces dernières régulièrement lors du vol de reconnaissance.

A cette fin, l'emport d'une base de recharge par le dispositif volant peut être considéré de manière à pouvoir recharger la batterie régulièrement.

Toutefois, la masse de la base de recharge pénalise l'autonomie du dispositif volant, et limite d'autant le temps de vol entre deux phases de recharge de la batterie rechargeable.

Par ailleurs, une telle base nécessite, en général, un point de charge spécifiquement adapté afin d'être connecté électriquement à une source d'alimentation électrique. Pour parcourir des distances importantes, une infrastructure de points de recharge doit alors être mise en place tout au long de la ligne pour assurer la recharge régulière tout au long du vol de reconnaissance.

Le document US 7 318 564 divulgue un dispositif volant à propulsion électrique pourvu d'un module de charge permettant la chargement d'un batterie rechargeable au niveau d'une ligne de transport électrique. Toutefois, le module proposé dans ce document, fonctionnant par induction, ne permet de réguler le courant de charge de la batterie pendant la phase de charge.

Le document US 2016/137311 A1 décrit un véhicule aérien comprenant une batterie, des capteurs permettant un vol autonome et un crochet permettant d'accoupler le véhicule aérien à un câble.

Le document Anonymous : « MIT teaches a drone to perch on power lines so it can recharge during flight », Geek.com, évoque un drone susceptible de s'accrocher à une ligne et d'effectuer une charge de sa batterie au moyen de cette ligne.

Le brevet US 9 421869 B1 décrit un véhicule aérien porteur comprenant des moyens pour générer un courant électrique à partir d'un champ électrique produit au voisinage d'une ligne électrique aérienne et une plateforme permettant de recevoir un autre véhicule aérien afin de le recharger.

Un but de la présente invention est de proposer un dispositif volant susceptible d'être mis en sécurité, notamment à l'abris du vandalisme.

Un autre but de la présente invention est de proposer un dispositif volant à propulsion électrique dont l'autonomie n'est pas limitée par l'emport d'une base de recharge et qui ne nécessite pas la mise en place d'une infrastructure particulière de points de recharge.

Un autre but de la présente invention est de proposer un dispositif volant à propulsion électrique capable de recharger sa batterie rechargeable au niveau d'une ligne de distribution électrique.

### EXPOSÉ DE L'INVENTION

Les buts de la présente invention sont, au moins en partie, atteints par un dispositif volant tel que défini à la revendication 1. Différents modes de mise en œuvre de l'invention sont décrits dans les revendications dépendantes.

### BRÈVE DESCRIPTION DES DESSINS

D'autres caractéristiques et avantages apparaîtront dans la description qui va suivre d'un dispositif volant selon l'invention, donnés à titre d'exemples non limitatifs, en référence aux dessins annexés dans lesquels :
- la figure 1 est une représentation schématique fonctionnelle d'un dispositif volant à propulsion électrique selon la présente invention, le cadre en traits discontinus délimitant les moyens de charge ;
- la figure 2 est une représentation schématique d'un dispositif volant à propulsion électrique, selon la présente invention, accroché à un câble de la ligne de distribution électrique selon un premier exemple d'accroche dudit dispositif ;
- les figures 3a et 3b sont des représentations schématiques d'un dispositif volant à propulsion électrique, selon la présente invention, accroché à une ligne de distribution électrique selon un second exemple d'accroche dudit dispositif, sur ces deux figures 3a et 3b, le dispositif volant est pourvu d'une cage de Faraday, respectivement, complète et partielle, il est entendu que l'une ou l'autre des cages de Faraday complète ou partielle peut être mise en œuvre pour l'un quelconque des modes de réalisation de la présente invention ;
- la figure 4 est illustration de l'effet de saturation de l'élément magnétique lors d'une phase de recharge, en particulier la figure 4 représente l'amplitude du courant dans le câble de la ligne (i₁) et l'amplitude du courant induit (i₂) en fonction du temps symbolisé par l'axe horizontal ;
- les figures 5a à 5d sont des représentations schématiques de moyens de charge selon la présente invention mettant en œuvre un pont de Graetz, en particulier, les figures 5a et 5b illustrent différents agencements pour les moyens de court-circuit du second bobinage ou de l'entrée du redresseur, et les figures 5c et 5d illustrent différents agencements pour les moyens de régulation du courant de charge de la batterie ;
- la figure 6 est une représentation schématique des moyens de charge comprenant un redresseur fait d'une unique diode, dite diode directe ;
- les figures 7a à 7g sont des représentations schématiques de moyens de charge selon un premier exemple de la présente invention mettant en œuvre un redresseur à deux diodes, dans cet exemple l'au moins un bobinage comprend un premier et un second bobinage, en particulier, les figures 7a à 7c illustrent des exemples particuliers de moyens court-circuit, tandis que les figures 7d à 7g illustrent des exemples particuliers de moyens de régulation ;

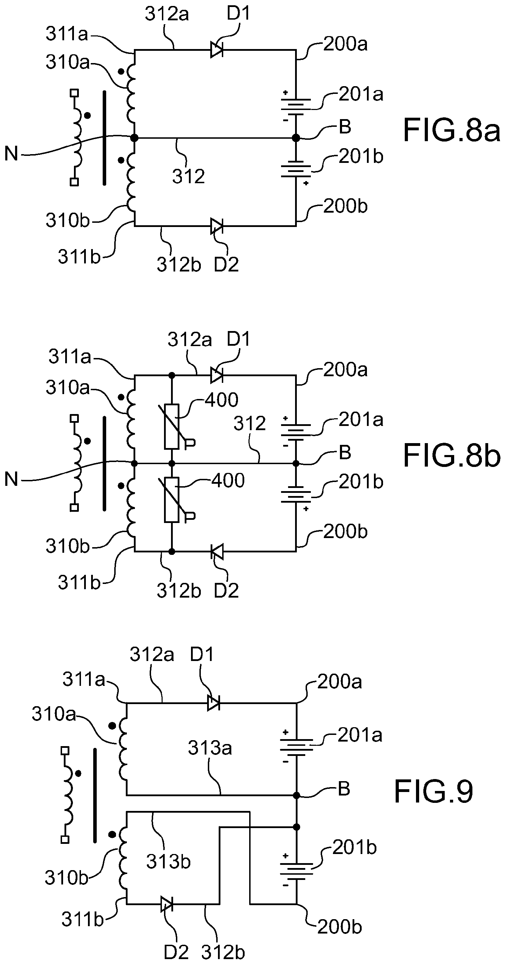

- les figures 8a et 8b sont des représentations schématiques de moyens de charge selon deux variantes d'un deuxième exemple de la présente invention mettant en œuvre un redresseur à deux diodes, dans cet exemple l'au moins un bobinage comprend un premier et un second bobinage, et l'au moins une batterie est faite d'une première et d'une seconde batteries connectées au niveau d'un nœud B, notamment selon la première variante représentée à la figure 8a, les deux batteries sont connectées selon des polarités opposées, et selon la seconde variante représentée à la figure 8b, les deux batteries sont connectées en série ;
- la figure 9 est une représentation schématique de moyens de charge selon un troisième exemple mettant en œuvre un redresseur à deux diodes, dans cet exemple l'au moins un bobinage comprend le premier et second bobinage dépourvus de nœud commun, et l'au moins une batterie est faite d'une première et d'une seconde batterie connectées en série ;
- la figure 10 est une représentation schématique de moyens de charge selon un quatrième exemple mettant en œuvre un redresseur à deux diodes, dans cet exemple l'au moins une batterie est faite d'une première et d'une seconde batterie connectées en série ;
- la figure 11 est une représentation schématique des moyens de charge selon la présente invention n'impliquant qu'un seul bobinage et un pont de Graetz modifié.

### EXPOSÉ DÉTAILLÉ DE MODES DE RÉALISATION PARTICULIERS

Les lignes de distributions électriques sont constituées de pylônes supportant des câbles, en particulier 3 câbles de phase et éventuellement un câble de neutre. Ils sont munis de chaines d'isolateurs électriques, notamment en verre, qui supportent ces câbles, classiquement non isolés, l'air autour du câble étant utilisé comme isolant électrique vis-à-vis des autres câbles et de l'environnement. Pour assurer une protection des câbles parcourus par le courant de la ligne contre la foudre, un câble supplémentaire dit de garde est placé au-dessus d'eux et celui-ci est relié aux pylônes et à la terre

Ainsi, la présente invention concerne un dispositif volant, avantageusement à propulsion électrique, pourvu d'au moins une batterie rechargeable et de moyens de charge. Les moyens de charge, au sens de la présente invention, sont adaptés pour permettre la charge de la batterie rechargeable au niveau d'un câble d'une ligne de distribution électrique, en particulier une ligne de distribution haute tension, par effet d'induction magnétique à la fréquence de la distribution électrique.

Selon la présente invention, les moyens de charge peuvent comprendre un bobinage et au moins un redresseur de courant agencés de manière à pouvoir être couplés à un des câbles de la ligne de distribution électrique, et ainsi prélever une énergie au niveau de la ligne de distribution électrique destinée à charger la batterie rechargeable.

Selon la présente invention, et contrairement aux solutions de l'art antérieur, le premier bobinage (le ou les câbles de la ligne de distribution électrique) est alors toujours parcouru par un courant électrique. Le dispositif volant, au sens de la présente invention, peut s'adapter au courant électrique circulant dans le premier bobinage.

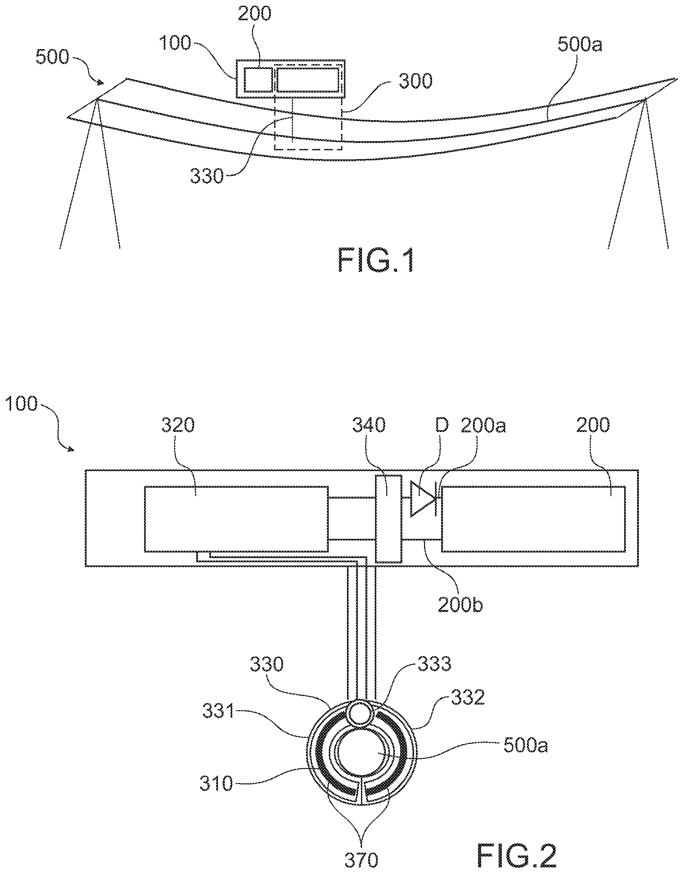

A la figure 1, on peut voir une représentation fonctionnelle d'un dispositif volant à propulsion électrique 100 couplé à un câble 500a d'une ligne de distribution électrique 500.

Par « dispositif volant à propulsion électrique », on entend par exemple un drone ou tout autre dispositif volant télécommandé ou non, et dont l'énergie nécessaire à la propulsion électrique est fournie par une batterie embarquée par ledit dispositif, en particulier, au sens de la présente invention, une batterie rechargeable.

La batterie rechargeable peut, par exemple, être une batterie lithium ion. Toutefois, l'invention peut être étendue à tout type de batterie rechargeable.

Il est également entendu que chaque câble de la ligne de distribution électrique est une ligne parcourue par un courant alternatif, en particulier un courant alternatif d'une fréquence comprise entre 40 Hz et 70 Hz.

Le câble 500a de la ligne de distribution électrique 500 au sens de la présente invention est également isolé des autres câbles de la ligne de distribution électrique.

Le dispositif volant à propulsion électrique 100 comprend des moyens de charge 300 de l'au moins une batterie rechargeable 200.

L'au moins une batterie rechargeable 200 comprend deux bornes principales dites, respectivement, première borne 200a et second borne 200b.

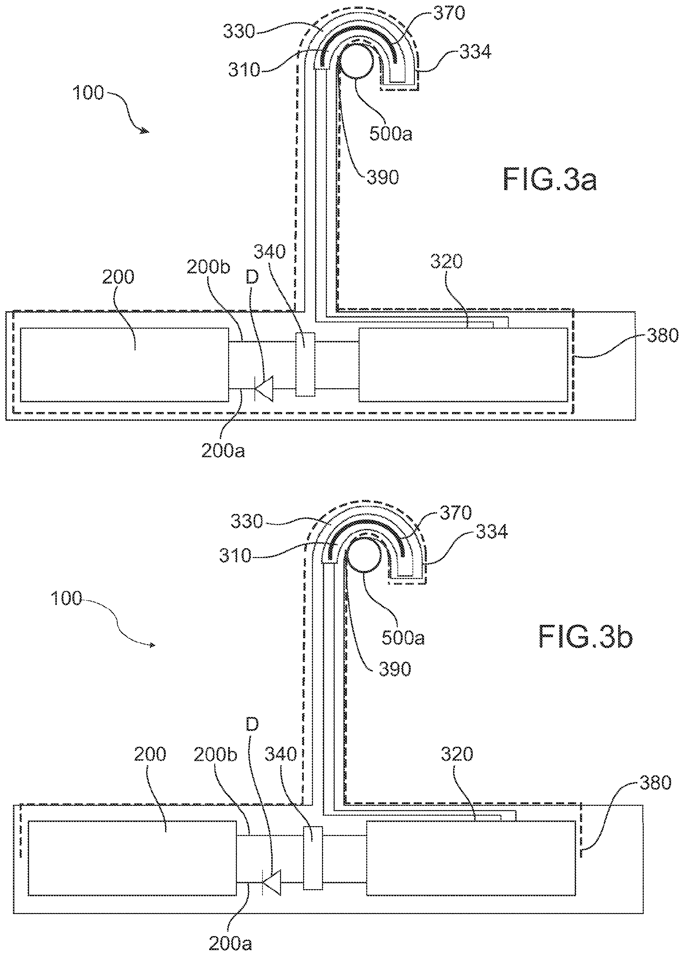

Les moyens de charge 300 peuvent comprendre au moins un bobinage 310 et un redresseur de courant 320 (figures 2, 3a et 3b).

L'au moins un bobinage 310 est fait d'un enroulement d'un fil conducteur, par exemple un fil en cuivre. Le fil conducteur peut être enroulé autour d'un élément ferromagnétique 370 qui comprend par exemple du fer. Il est entendu sans qu'il soit nécessaire de le préciser que le fil conducteur comprend deux extrémités qui sont, dans toute la suite de la présente description nommées extrémités de l'au moins un bobinage 310. De manière préférée, le bobinage 310 est réalisé autour d'un élément ferromagnétique en tôle de fer avec un fil de cuivre isolé par plusieurs couches successives de vernis, appelé dans les domaines de l'électronique fil de cuivre émaillé.

L'au moins un bobinage 310 comprend deux extrémités principales dites, respectivement, première extrémité 311a et seconde extrémité 311b.

Au sens de la présente invention, les extrémités principales de l'au moins un bobinage sont deux extrémités isolées, en d'autres termes, un nœud commun entre deux bobinage ne peut constituer une extrémité principale au sens de la présente invention.

Par ailleurs, un au moins un bobinage fait de deux bobinages dépourvus de nœud commun, au sens de la présente invention, comprend également deux extrémités principales. Dans ce cas de figure, chacun des deux bobinages comprend une des deux extrémités principales.

Le redresseur de courant 320 peut comprendre deux bornes d'entrée, dites, respectivement, première borne d'entrée et seconde borne d'entrée, et deux bornes de sortie dites, respectivement, première borne de sortie et seconde borne de sortie.

Un redresseur de courant 320 au sens de la présente invention est adapté pour convertir un courant alternatif en un courant continu. En d'autres termes, le redresseur de courant 320 est agencé pour transformer un courant alternatif à la fréquence de la ligne de distribution circulant dans l'au moins un bobinage 310 en un courant continu destiné à être délivré aux bornes de la batterie rechargeable 200. Un courant continu au sens de la présente invention est un courant qui ne circule que dans un sens.

Le redresseur de courant 320, qui sera décrit plus en détails dans la suite de l'énoncé de la présente invention, peut comprendre un pont de Graetz, ou encore des diodes.

Les moyens de charge 300 comprennent en outre un moyen de couplage 330.

Le moyen de couplage mécanique 330 est adapté pour permettre l'accroche et/ou le maintien du dispositif volant 100 à un des câbles de la ligne de distribution électrique 500.

Par « moyen de couplage mécanique », on entend un moyen d'accroche dudit moyen à un câble. En particulier, l'accroche peut être une liaison fixe, une liaison glissière, une liaison pivot glissant, la liaison peut être partielle, via un crochet, via une fourche.

Le moyen de couplage mécanique 330 est adapté pour coupler l'au moins un bobinage 310 avec le câble 500a de la ligne de distribution électrique 500 de manière à ce que le courant alternatif, dit courant du câble de ligne, circulant dans ledit câble de ligne 500 génère par induction la circulation d'un courant, dit courant induit, dans l'au moins un bobinage 310. Le courant induit peut alors être redressé par le redresseur de courant 320 en un courant, dit courant de charge, destiné à charger la batterie rechargeable 200.

Selon un premier exemple de réalisation illustré à la figure 2, le moyen de couplage mécanique 330 peut comprendre une pince pourvue, par exemple, de deux mors 331 et 332 (« grippers » selon la terminologie anglo-saxonne) pivotant autour d'un axe 333. La pince peut aussi comprendre un nombre de mors supérieur.

En particulier, l'au moins un bobinage 310 peut former au moins un mors de la pince. De manière avantageuse, l'au moins un bobinage est surmoulée d'un matériau isolant, par exemple un matériau polymère et/ou plastique.

Selon un second exemple de réalisation illustré aux figures 3a et 3b, le moyen de couplage mécanique 330 peut comprendre un crochet 334. Le crochet 334 permet par exemple de suspendre le dispositif volant 100 au câble de la ligne de distribution électrique 500.

Par « suspendre », on entend le maintien du dispositif volant sous le câble (et au câble) dans le sens de la gravité.

En particulier, l'au moins un bobinage 310 forme le crochet. De manière avantageuse l'au moins un bobinage 310 est surmoulé d'un matériau isolant, par exemple un matériau polymère et/ou plastique.

Selon ces deux exemples de réalisation, le moyen de couplage mécanique 330 permet de faire coopérer le dispositif volant 100 et le câble 500a de la ligne de distribution électrique 500 pendant une phase de recharge. De plus, ce couplage peut n'être que mécanique permettant alors l'arrêt du vol du dispositif pour son repos et sa mise en sécurité. En effet, cet arrêt sur un câble d'une ligne de distribution électrique apparait alors aussi comme un système anti vol pour ce type d'objet volant devant faire un arrêt à des kilomètres de leur propriétaire. Ce type d'arrêt est alors possible que la batterie nécessite un rechargement ou pas.

Une variante de ce couplage mécanique est de pouvoir permettre un déplacement longitudinal du dispositif volant à propulsion électrique le long du câble tout en restant en suspension sans voler via un moyen de roulement.

Selon l'invention revendiquée, les moyens de charge 300 sont disposés dans une cage de Faraday 380 pourvue d'une électrode 390 agencée pour être en contact avec le câble de la ligne de distribution électrique dès lors que le dispositif volant à propulsion électrique est en phase d'approche et/ou accroché au câble de la ligne de distribution électrique (en traits discontinus aux figures 3a et 3b). De manière particulièrement avantageusement l'électrode 390 peut être disposée au niveau du moyen de couplage de sorte qu'un contact s'établisse entre l'électrode et le câble 500a de la ligne 500 dès l'instant de couplage.

La cage de Faraday 380 et son électrode 390 protègent ainsi les moyens de charge 300 et les dispositifs électriques et électroniques alimentées par la batterie 200 des effets d'un arc électrique pouvant survenir lors de l'approche du dispositif volant à propulsion électrique 100 du câble de la ligne de distribution électrique 500.

La cage de Faraday peut être complète (figure 3a), c'est-à-dire entourant complètement les moyens de charge 300, la batterie 200 et les dispositifs électriques et électroniques alimentées par la batterie 200, ou partielle (figure 3b), c'est-à-dire de surface limitée pour faire écran aux lignes de champ de la ligne de distribution ou réduite à un plan conducteur de référence faisant écran. De manière préférée, l'un des pôles de la batterie est relié à la cage de Faraday totale ou partielle à un écran conducteur.

De manière avantageuse, les moyens de charge peuvent également comprendre des moyens de court-circuit 340 (figures 2, 3a et 3b) adaptés pour mettre en court-circuit les moyens de charge 300. La mise en court-circuit des moyens de charge 300 arrête le processus de charge de la batterie rechargeable 200.

De manière particulièrement, avantageuse, les moyens de court-circuit 340 sont adaptés pour mettre les moyens de charge en court-circuit dès lors que la batterie rechargeable 200, au cours d'une phase de charge, a atteint une charge au moins égale à une charge prédéterminée.

En d'autres termes, les moyens court-circuit 340 sont agencées pour interrompre le courant de charge circulant dans la batterie dès que l'état de charge de cette dernière a atteint un état de charge prédéterminé.

Les moyens de court-circuit 340 permettent ainsi de prévenir l'échauffement et/ou l'endommagement de l'au moins un bobinage 310 dès lors que la charge de la batterie rechargeable 200 est complète. Les moyens de court-circuit 340 permettent par ailleurs de laisser le dispositif volant 100 accroché au câble de la ligne de distribution électrique pendant une phase de repos dudit dispositif 100.

La charge prédéterminée est paramétrée par l'utilisateur du dispositif volant 100. De manière avantageuse, la charge prédéterminée correspond à une charge complète de la batterie rechargeable 200, déterminée à partir de la tension de la batterie ou sur l'intégrale du courant par le temps de charge.

Ainsi, contrairement à la solution proposée dans le document US 7 318 564, il n'est pas nécessaire de désolidariser le dispositif volant du câble 500a dès lors que la charge de la batterie rechargeable 200 est complète.

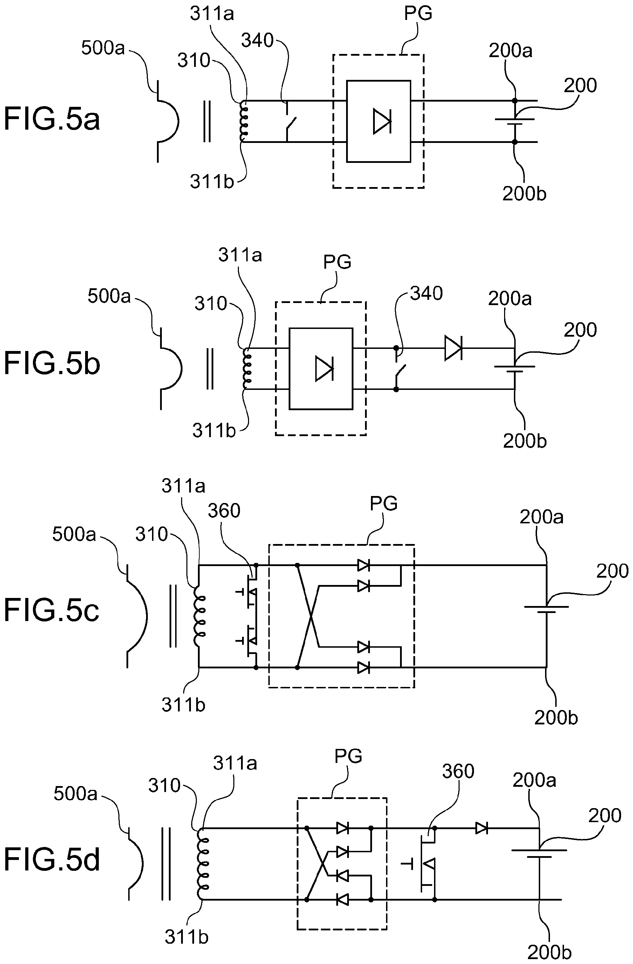

Les moyens de court-circuit 340 peuvent avantageusement être agencés pour mettre en court-circuit 340 l'au moins un bobinage 310 (figure 5a).

De manière alternative, les moyens courts-circuits 340 peuvent être agencés pour mettre en court-circuit le redresseur de courant 320 (figure 5b). Selon cette alternative, les moyens de charge 300 comprennent une diode D (figures 2, 3a, 3b, et 5b) destinée à prévenir la circulation d'un courant décharge de la batterie rechargeable dans les moyens courts-circuits dès lors que le redresseur de courant 320 est en court-circuit.

Les moyens courts-circuits 340 peuvent comprendre un interrupteur, par exemple un transistor, avantageusement piloté par une carte et/ou un calculateur.

Les moyens de charge 300 peuvent comprendre des moyens de régulation 360 (figure 5c et 5d) destinés à limiter le courant de charge. De manière avantageuse, les moyens de régulation sont adaptés pour exécuter un hachage de l'un ou l'autre des courants induit et de charge. Cette fonction de hachage du courant permet de réguler le courant de charge de la batterie rechargeable 200, et donc de s'adapter au courant circulant dans le câble de la ligne de distribution électrique. En d'autres termes, les moyens de régulation 360 imposent des phases de court-circuit des moyens de charge 300 lors de la phase de charge de la batterie rechargeable 200.

Ainsi, le nombre de spires de l'au moins un bobinage 310 et les moyens de régulation 360 peuvent être dimensionnés pour que le courant de charge soit constant dès lors que le courant de ligne est compris dans une gamme prédéterminée.

Par exemple, le courant de charge peut être fixé à un ampère pour des courants de ligne compris entre cent et mille ampères.

Les moyens de régulation 360 peuvent comprendre un interrupteur électronique bidirectionnel, par exemple monté en parallèle avec l'au moins un bobinage 310.

Les moyens de régulation 360 peuvent de manière alternative être intercalés entre le redresseur de courant 320 et la batterie rechargeable 200.

Le hachage de l'un ou l'autre des courants induit et de charge peut être exécuté à une fréquence de 20 kHz ou plus, de façon au découper au-delà du spectre auditif.

Selon un mode de réalisation particulièrement avantageux, l'élément ferromagnétique 370 est dimensionné pour être saturable. En d'autres termes, il est dimensionné pour interrompre le couplage inductif entre l'au moins un bobinage 310 et le câble de la ligne de distribution électrique 500 dès lors que le produit de la tension par spire du ou des bobinages par le temps dépasse une valeur prédéterminée, qui correspond à l'atteinte par le matériau magnétique de son champ de saturation. En d'autres termes, l'élément ferromagnétique 370 est dimensionné de manière à être amené jusqu'à saturation à chaque demi-période du courant du câble de la ligne pour limiter les durées du transfert d'énergie du câble 500a vers les moyens de charge 300.

Il est notable que cet effet de saturation est en général un effet indésirable, en particulier lorsque l'effet d'induction est mis en œuvre pour la mesure d'un courant d'un câble de la ligne. Cependant, dans le cadre de la présente invention, cet effet est avantageusement mis à profit pour ne transférer du courant dans le bobinage secondaire 310 que pendant un temps limité qui est une fraction de la période du courant du câble de la ligne électrique. A chaque inversion du sens du courant dans le câble, le matériau magnétique désature, ce qui permet le rétablissement du couplage et la génération d'un courant induit dans le bobinage 310. Le matériau magnétique sature à nouveau au bout d'un temps déterminé nécessaire pour atteindre le champ de saturation opposé.

Le dimensionnement de l'élément ferromagnétique dépend du champ de saturation de celui-ci, de la section du matériau magnétique, du nombre de spire du bobinage 310, et de la tension aux bornes de celui-ci. Dans pareil cas, l'homme du métier, avec ses connaissances générales, pourra dimensionner l'élément ferromagnétique en fonction du besoin. Il s'agit ici non pas de réguler le courant de charge mais de réguler la charge de la batterie via le temps de charge.

En tout état de cause, un élément ferromagnétique saturable implique la considération de plus petites dimensions pour ledit élément, et par voie de conséquence, des moyens de charge 300 de plus faible masse.

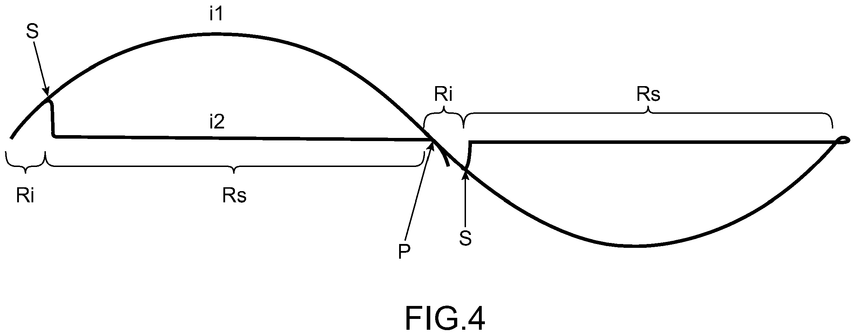

Le principe de mise en saturation de l'élément ferromagnétique est illustré à la figure 4.

En particulier, le courant induit i2 circulant dans l'au moins une bobine présente deux régimes dits, respectivement, régime d'induction (Ri) et régime de saturation (Rs).

Pendant le régime d'induction Ri en début de période du courant du câble de la ligne, l'au moins un bobinage 310 et le câble de la ligne 500 sont magnétiquement couplés et un courant induit i2, en phase avec le courant du câble de la ligne il, circule dans l'au moins un bobinage 310. Pendant ce régime d'induction Ri, le champ magnétique dans l'élément ferromagnétique 370 augmente jusqu'à atteindre un champ magnétique dit, champ magnétique de saturation, et à partir duquel le courant induit i2 s'annule (l'au moins un bobinage 310 et le câble de la ligne de distribution électrique 500 ne sont plus couplés, point S sur la figure 4). Cet instant d'annulation du courant induit marque le début du régime de saturation Rs au cours duquel l'au moins un bobinage 310 ne prélève plus d'énergie au câble de la ligne de distribution électrique 500.

L'inversion du courant de ligne au point P permet de désaturer l'élément ferromagnétique et de débuter à nouveau un régime d'induction Ri en début de seconde demi période du courant du câble de la ligne.

De manière particulièrement avantageuse, le dispositif volant peut comprendre des moyens de mesure du courant induit. La mesure du courant induit permet notamment de suivre l'état de charge de l'au moins une batterie ou de diagnostiquer la signature du courant de ligne (le courant circulant de le câble 500a).

Les moyens de charge 300 sont ainsi en mesure de distinguer un câble de ligne de phase d'un câble de neutre, pour les cas où le conducteur de neutre serait distribué ou d'un câble de garde.

Les moyens de mesure de courant peuvent comprendre une résistance, par exemple une résistance calibrée (« shunt » selon la terminologie anglo-saxonne).

Le dispositif volant à propulsion électrique 100 selon la présente invention est ainsi avantageusement mis en œuvre pour la surveillance de lignes de distribution électrique 500, et être rechargé par prélèvement d'énergie au niveau de ces dernières.

Le vol du dispositif volant à propulsion électrique 100 à proximité des lignes de distribution électriques permet également de considérer l'emport de batteries rechargeables de plus faible capacité et donc plus légères.

De plus, la neutralisation des moyens de charge avec les moyens de court-circuit permet de contrôler le courant de charge, puis de l'annuler lorsque le niveau de charge requis dans la batterie 200 est atteint.

Enfin, la mesure du courant induit au niveau du second bobinage peut aussi être utilisée pour obtenir des informations sur la signature du courant primaire de manière à diagnostiquer les lignes de distribution électriques en cours surveillance.

Des moyens de charge 300 sont donnés à titre d'exemple aux figures 5a-5d, 6, 7a-7g, 8a, 8b, 9, 10 et 11.

En particulier, les figures 5a à 5d illustrent des moyens de charge 300 comprenant un unique bobinage 310 (la mise en œuvre de plusieurs bobinages en série n'est toutefois pas exclue), et dont le redresseur de courant 320 comprend un pont de Graetz PG. Un pont de Graetz est un assemblage de quatre diodes montées en pont. Le pont de Graetz PG permet de redresser un courant alternatif en un courant continu (c'est-à-dire circulant dans un seul sens).

Selon cet exemple, les moyens de court-circuit 340 peuvent être agencés pour mettre en court-circuit le bobinage 310 (figure 5a), ou le redresseur de courant 320 (figure 5b). Les moyens de court-circuit 340 peuvent comprendre un interrupteur, en particulier un interrupteur commandé, par exemple un transistor MOS.

Toujours selon cet exemple, les figures 5c et 5d illustrent différents agencements des moyens de régulation 360.

En particulier, à la figure 5c, les moyens de régulation 360 peuvent comprendre un interrupteur bidirectionnel placé en parallèle avec le bobinage 310 (autrement dit en amont du redresseur de courant). Un interrupteur bidirectionnel comprend par exemple deux transistors MOS.

A la figure 5d, les moyens de régulation 360 comprennent un interrupteur disposé en sortie du redresseur de courant 320.

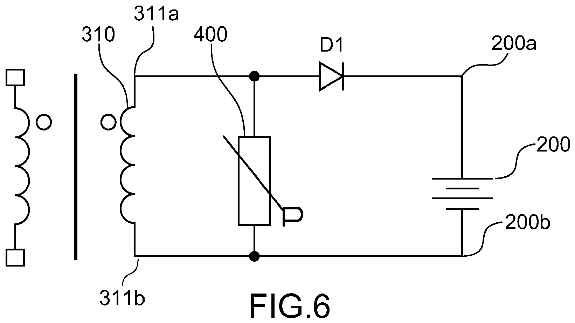

De manière alternative, le redresseur 320 peut comprendre une diode, dite diode directe D1 (figure 6).

En particulier, la diode directe D1 peut être agencée selon une polarité permettant la charge de l'au moins une batterie par le courant de charge.

Selon cette configuration, l'au moins une batterie 200 et les moyens de charge forment un circuit fermé.

Dans ces conditions, dès lors que l'élément ferromagnétique 370 est mis en œuvre, il peut être avantageux de placer des moyens d'écrêtage 400 électriquement connectés en parallèle avec l'au moins une bobine 310 permettant de désaturer ledit élément lors de l'inversion de courant de ligne. Les moyens d'écrêtage sont notamment adaptés pour laisser circuler un courant induit négatif dans la boucle fermée formée par lesdits moyens d'écrêtage et l'au moins une bobine 310, et ainsi permettre la désaturation de l'élément ferromagnétique 370.

Les moyens d'écrêtage 400 peuvent notamment comprendre une résistance variable en tension (VDR). La résistance variable en tension, appelée aussi varistance, présente en particulier une résistance importante en dessous d'un certain seuil de tension à ses bornes et présente une résistance faible au-delà de cette tension.

Toujours de manière alternative, le redresseur 320 peut comprendre la diode directe D1 et une autre diode, dite diode indirecte D2.

En particulier, la diode directe D1 et la diode indirecte D2 sont agencées chacune selon une polarité permettant la charge de l'au moins une batterie par le courant de charge.

Selon cette configuration, l'au moins un bobinage peut être connecté à l'au moins une batterie 200 via deux branches dites, respectivement, première branche 312a et seconde branche 312b. Notamment, la diode directe D1 et la diode indirecte D2 sont montées, respectivement, sur la première branche 312a et sur la seconde branche 312b (ou inversement).

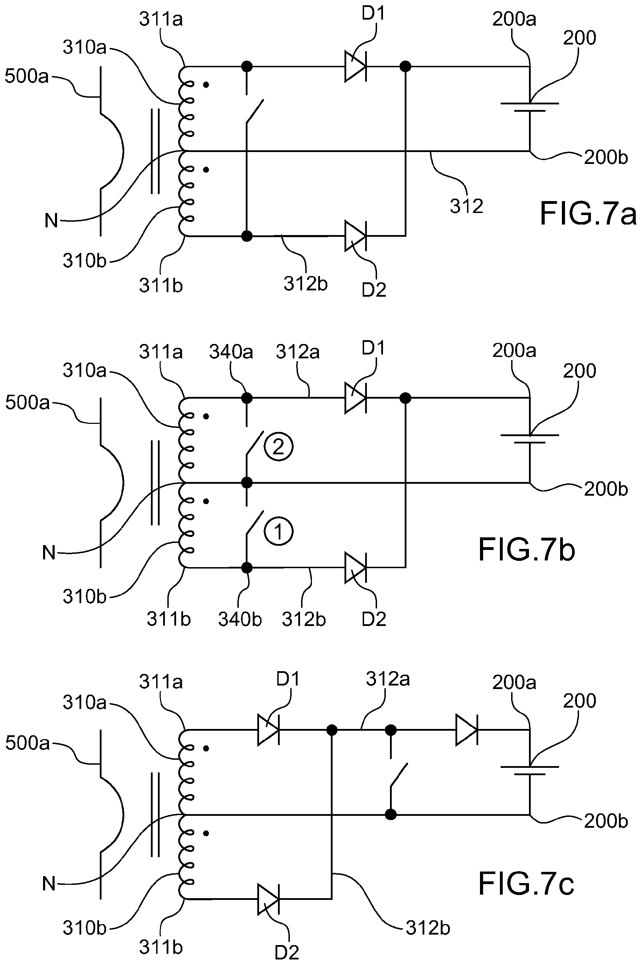

Les figures 7a à 7g illustrent un premier exemple mettant en œuvre les diodes directe D1 et indirecte D2.

Dans ce premier exemple, l'au moins un bobinage 310 comprend deux bobinages dits, respectivement, premier bobinage 310a et second bobinage 310b connectés en série au niveau d'un nœud commun N.

Le nœud commun N est, selon cet exemple, connecté par une branche principale 312 à une borne, par exemple la borne négative, de la batterie rechargeable 200.

La première extrémité 311a et la seconde extrémité 311b de l'au moins un bobinage 310, sont connectées, respectivement, selon la première branche 312a et la seconde branche 312b à l'autre borne, par exemple la borne positive, de l'au moins une batterie rechargeable.

Les moyens de court-circuit 340 peuvent comprendre un interrupteur destiné à raccorder les première 311a et seconde 311b extrémités (figure 7a).

De manière alternative, les moyens de court-circuit 340 peuvent comprendre un premier interrupteur 340a et un second interrupteur 340b destinés à connecter chacun le nœud N avec, respectivement, la première extrémité 311a et la seconde extrémité 311b (figure 7b).

Toujours de manière alternative (figure 7c), les moyens de court-circuit peuvent comprendre un interrupteur destiné à connecter le nœud N avec la sortie de chacune des deux diodes D1 et D2. Une diode D, connectant la sortie des deux diodes et la borne positive de la batterie rechargeable, peut être également considérée afin de prévenir la circulation d'un courant décharge de la batterie rechargeable dans les moyens de court-circuit dès lors que le redresseur de courant 320 est en court-circuit.

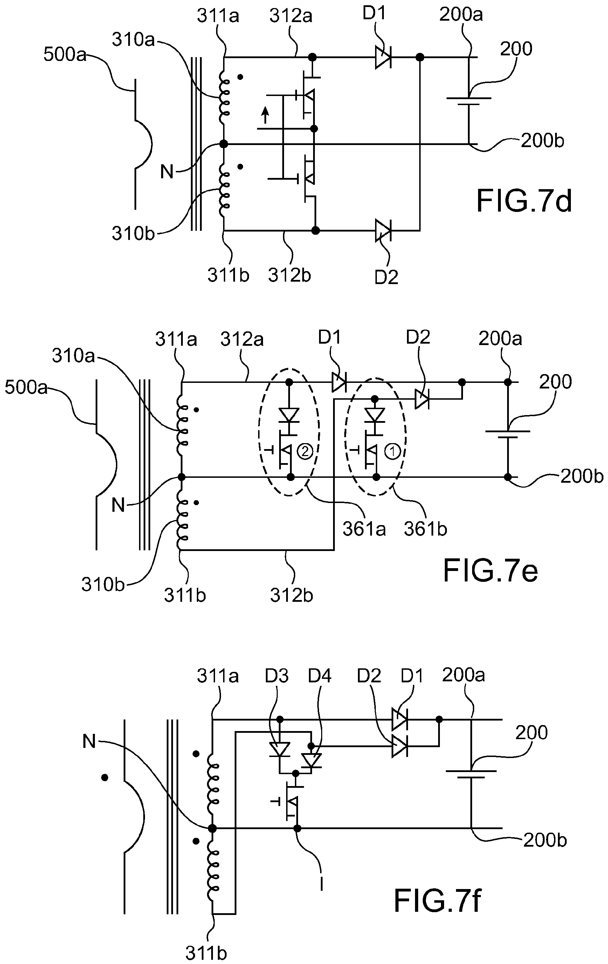

Les figures 7d à 7f représentent des exemples de moyens de régulation 360 dès lors que deux bobinages sont considérés.

En particulier, à la figure 7d, les moyens de régulation 360 comprennent un interrupteur bidirectionnel tension et courant reliant la première extrémité 311a et la seconde extrémité 311b. L'interrupteur bidirectionnel peut alors comprendre deux transistors MOS de type N. Une tension de grille appliquée au niveau de la grille des transistors, supérieure à la tension de seuil des deux transistors, permet de court-circuiter les première 311a et seconde 311b extrémités.

De manière alternative, tel que représenté à la figure 7e, les moyens de régulation 360 peuvent comprendre deux modules d'interruption dits, respectivement, premier module 361a et second module 361b reliant le nœud N, respectivement, à la première extrémité 311a et à la seconde extrémité 311b.

Le premier module 361a et le second module 361b comprennent chacun une diode montée en série avec un interrupteur, en particulier, un transistor de type MOS.

Selon cet agencement, le transistor du premier module 361a court-circuite la première extrémité 311a et le nœud N dès lors que le courant généré par le premier bobinage 310a est négatif. De manière équivalente, le transistor du second module 361b court-circuite la seconde extrémité 311b et le nœud N dès lors que le courant généré par le second bobinage 310b est positif.

Selon encore une autre alternative représentée à la figure 7f, les moyens de régulation 360 peuvent comprendre une troisième diode D3, une quatrième diode D4 dont les entrées sont, respectivement connectées à la première extrémité 311a et à la seconde extrémité 311b. Les diodes D3 et D4 comprennent également une sortie commune reliée au nœud N via un interrupteur I, ledit interrupteur étant avantageusement un transistor MOS.

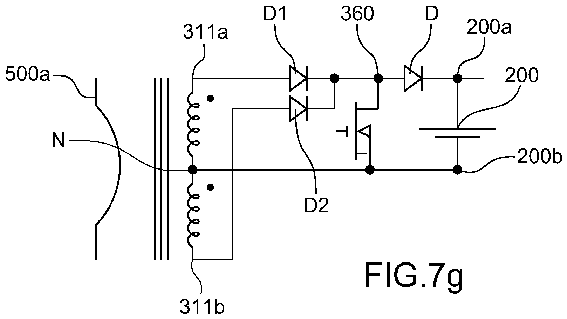

Toujours selon une autre alternative illustrée à la figure 7g, les moyens de régulation 360 peuvent être agencés pour connecter le nœud N avec la sortie de la première D1 et de la seconde D2 diode. Une diode D, connectant la sortie des deux diodes et la borne positive de la batterie rechargeable, peut être également considérée afin de prévenir la circulation d'un courant décharge de la batterie rechargeable dans les moyens de court-circuit dès lors que le redresseur de courant 320 est en court-circuit.

De manière générale, un agencement comprenant le premier bobinage et le second bobinage permet de minimiser les pertes. En effet, selon cette configuration, le courant induit ne traverse qu'une seule diode, et n'est donc affecté que par des pertes associées à son passage dans ladite diode.

Les figures 8a et 8b illustrent deux variantes d'un deuxième exemple mettant en œuvre les diodes directe D1 et indirecte D2.

Dans ce deuxième exemple, l'au moins une batterie comprend une première batterie 201a et une seconde batterie 201b raccordées selon un nœud commun B.

L'au moins un bobinage 310 comprend le premier bobinage 310a et le second bobinage 310b agencés en série au niveau d'un nœud commun N.

La branche principale 312 connecte le nœud N au nœud B, tandis que la première branche 312a connecte la première extrémité 311a à une des bornes principales, et la seconde branche 312b connecte la seconde extrémité 311b à l'autre des bornes principales.

La première variante de ce deuxième exemple illustrée à la figure 8a présente la première batterie 201a et la seconde batterie 201b connectées selon des polarités opposées.

La seconde variante de ce deuxième exemple illustrée à la figure 8b présente la première batterie 201a et la seconde batterie 201b agencées en série.

Selon ce deuxième exemple, les premier 310a et second 310b bobinages peuvent être mis en œuvre chacun avec l'élément ferromagnétique 370.

Dans ces conditions, et plus particulièrement dans le cadre de la seconde variante, les moyens d'écrêtage 400 décrits en relation avec la figure 6 peuvent avantageusement être mis en œuvre.

La figure 9 illustre un troisième exemple mettant en œuvre les diodes directe D1 et indirecte D2.

Dans ce troisième exemple, l'au moins une batterie comprend une première batterie 201a et une seconde batterie 201b raccordées selon un nœud commun B, et agencée en série.

L'au moins un bobinage 310 comprend également le premier bobinage 310a et le second bobinage 310b. Ces derniers sont dépourvus de nœud commun.

Le premier bobinage 310a est connecté selon la première branche 312a à la première borne 200a, et selon une autre branche, dite première branche secondaire 313a au nœud commun B.

Le second bobinage 310b est connecté selon la seconde branche 312b au nœud commun B, et selon une autre banche, dite seconde branche secondaire 313b, à la seconde borne 200b.

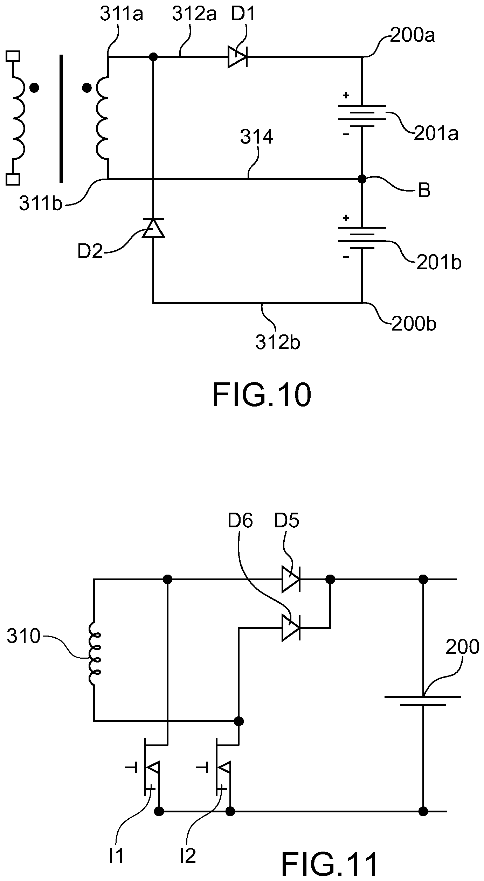

La figure 10 illustre un quatrième exemple mettant en œuvre les diodes directe D1 et indirecte D2.

Dans ce quatrième exemple, l'au moins une batterie 200 comprend la première batterie 201a et la seconde batterie 201b montées en série et présentent un nœud commun B.

Toujours selon ce quatrième exemple, la première branche 312a et la seconde branche 312b connectent la première extrémité 311a, respectivement, à la première borne 201a et à la seconde borne 201b. Une troisième branche 314 connecte la seconde extrémité 311b au nœud commun B.

La diode directe D1 permet ainsi la charge de la première batterie avec la partie positive du courant induit, et la diode indirecte D2 permet la charge de la seconde batterie avec la partie négative du courant induit.

La figure 11 représente un autre exemple de réalisation des moyens de charge 300 selon la présente invention. Selon cet autre exemple, les moyen des charge comprennent un unique bobinage 310 dont chaque extrémité est connectée à l'entrée d'une diode différentes dites respectivement, diode D5 et diode D6. Les deux diodes D5 et D6 ayant une sortie commune connectée à la borne positive de la batterie rechargeable 200. Les moyens de charge 300 comprennent également deux interrupteurs I1 et I2 reliant chacun une extrémité du bobinage à la borne négative de la batterie rechargeable.

Les deux interrupteurs sont par exemple des transistors MOS. Si ces derniers sont non passants, ils se comportent comme des diodes rendant ainsi possible la charge de la batterie rechargeable.

Au contraire, s'ils conduisent, le bobinage 310 est en court-circuit.

Ainsi, selon la présente invention, le dispositif volant à propulsion électrique comprend des moyens adaptés pour recharger sa batterie rechargeable au niveau d'une ligne de distribution électrique.

Par ailleurs, dès lors que la charge de ladite batterie peut être exécutée en accrochant le dispositif 100 à un des câbles de la ligne 500, il n'est pas nécessaire de prévoir des points de charge spécifique aux moyens de charge de la présente invention.

La charge de la batterie rechargeable pouvant être exécuté en n'importe quel point des câbles de la ligne de distribution électrique, il n'est nullement nécessaire de prévoir une batterie à forte capacité.

## Revendications

1. Dispositif volant (100) à propulsion électrique comprenant :
- un moyen de couplage mécanique (330) agencé pour coopérer avec un câble (500a) d'une ligne de distribution électrique (500) de manière à maintenir solidaire au câble (500a) le dispositif volant dans une position de repos ;
- au moins une batterie (200) rechargeable destinée à fournir la puissance nécessaire à la propulsion électrique du dispositif volant ;
- des moyens de charge (300) de l'au moins une batterie (200) compris dans le moyen de couplage mécanique (330), les moyens de charge (300) étant adaptés, dès lors que le câble (500a) est parcouru par un courant dit courant de ligne, pour coopérer, avantageusement de façon magnétique, avec ledit câble (500a) afin de recharger l'au moins une batterie (200),
**caractérisé en ce que**:
les moyens de charge (300) sont disposés dans une cage de Faraday (380) pourvue d'une électrode (390) agencée pour être en contact avec le câble (500a) dès lors que le dispositif volant (100) est accroché au câble (500a), avantageusement l'électrode (390) est disposée au niveau du moyen de couplage mécanique (330).

2. Dispositif selon la revendication 1 dans lequel le moyen de couplage mécanique (330) comprend un crochet pour accrocher, avantageusement en suspension, le dispositif volant (100) au câble (500a).

3. Dispositif selon la revendication 1, dans lequel le moyen de couplage mécanique comprend une pince pourvue d'au moins deux mors de pince pour accrocher le dispositif volant (100) au câble (500a).

4. Dispositif selon l'une des revendications 1 à 3, dans lequel le moyen de couplage (330) est muni d'un moyen de roulement agencé pour permettre un déplacement du dispositif volant (100) le long du câble (500a) de la ligne de distribution.

5. Dispositif selon l'une des revendications 1 à 4, dans lequel les moyens de charge (300) comprennent au moins un bobinage (310) présentant deux extrémités principales dites, respectivement, première extrémité (311a) et seconde extrémité (311b), l'au moins un bobinage étant destiné à être couplé magnétiquement avec le câble (500a) dès lors qu'une coopération entre le moyen de couplage mécanique (330) et le câble (500a) s'opère de manière à générer par induction la circulation d'un courant, dit courant induit, dans l'au moins un bobinage (310) et destiné à recharger l'au moins une batterie (200).

6. Dispositif selon la revendication 5 et la revendication 2, dans lequel l'au moins un bobinage (310) forme le crochet.

7. Dispositif selon la revendication 5 et la revendication 3, dans lequel l'au moins un bobinage (310) forme au moins un des mors de la pince.

8. Dispositif selon l'une des revendications 5 à 7, dans lequel les moyens de charge (300) comprennent un redresseur (320) de courant agencé pour redresser le courant induit en courant à composante continue, dit courant de charge, avant d'être injecté dans l'au moins une batterie (200).

9. Dispositif selon la revendication 8, dans lequel le redresseur comprend au moins une diode, avantageusement le redresseur comprend deux diodes, encore plus avantageusement, le redresseur comprend un agencement de diodes formant un pont de Graetz.

10. Dispositif selon l'une des revendications 5 à 9, dans lequel les moyens de charge (300) comprennent des moyens de court-circuit (340) adaptés pour mettre en court-circuit les moyens de charge (300), avantageusement les moyens de court-circuit (340) sont adaptés pour mettre les moyens de charge (300) en court-circuit dès lors que l'au moins une batterie (200), au cours d'une phase de charge, a atteint une charge au moins égale à une charge prédéterminée, encore plus avantageusement la charge prédéterminée correspond à une charge complète de l'au moins une batterie (200).

11. Dispositif selon l'une des revendications 5 à 10, dans lequel des moyens court-circuit (340) sont agencés pour mettre en court-circuit l'au moins un bobinage (310).

12. Dispositif selon la revendication 11 et la revendication 8, dans lequel les moyens de court-circuit (340) sont agencés pour mettre en court-circuit le redresseur de courant (320), avantageusement les moyens de charge (300) comprennent une diode destinée à prévenir la circulation d'un courant de décharge de la batterie (200) dans les moyens de court-circuit (340) dès lors que le redresseur de courant (320) est en court-circuit.

13. Dispositif selon l'une des revendications 5 à 12, dans lequel les moyens de charge (300) comprennent des moyens de régulation (360) destinés à limiter le courant de charge, avantageusement les moyens de régulation (360) sont adaptés pour exécuter un hachage de l'un ou l'autre des courants induit et de charge.

## Patentansprüche

1. Elektrisch angetriebene Flugvorrichtung (100), enthaltend:
- ein mechanisches Kopplungsmittel (330), das dazu angeordnet ist, mit einem Kabel (500a) einer elektrischen Verteilungsleitung (500) zusammenzuwirken, um die Flugvorrichtung in einer Ruhestellung fest mit dem Kabel (500a) verbunden zu halten;
- zumindest eine wiederaufladbare Batterie (200), die dazu bestimmt ist, die für den elektrischen Antrieb der Flugvorrichtung erforderliche Leistung zu liefern;
- Lademittel (300) für die zumindest eine Batterie (200), die in dem mechanischen Kopplungsmittel (330) enthalten sind, wobei die Lademittel (300) geeignet sind, sobald das Kabel (500a) von einem Strom, Leitungsstrom genannt, durchflossen wird, vorteilhafterweise magnetisch mit dem Kabel (500a) zusammenzuwirken, um die zumindest eine Batterie (200) aufzuladen, **dadurch gekennzeichnet, dass**
die Lademittel (300) in einem Faradayschen Käfig (380) angeordnet sind, der mit einer Elektrode (390) versehen ist, die dazu angeordnet ist, mit dem Kabel (500a) in Kontakt zu stehen, sobald die Flugvorrichtung (100) an das Kabel (500a) angehängt ist, wobei die Elektrode (390) vorteilhafterweise im Bereich des mechanischen Kopplungsmittels (330) angeordnet ist.

2. Vorrichtung nach Anspruch 1, wobei das mechanische Kopplungsmittel (330) einen Haken aufweist, um die Flugvorrichtung (100) vorteilhafterweise schwebend an das Kabel (500a) anzuhängen.

3. Vorrichtung nach Anspruch 1, wobei das mechanische Kopplungsmittel eine Klammer aufweist, die mit zumindest zwei Klammerbacken versehen ist, um die Flugvorrichtung (100) an das Kabel (500a) anzuhängen.

4. Vorrichtung nach einem der Ansprüche 1 bis 3, wobei das Kopplungsmittel (330) mit einem Rollmittel versehen ist, das dazu angeordnet ist, eine Bewegung der Flugvorrichtung (100) entlang des Kabels (500a) der Versorgungsleitung zu ermöglichen.

5. Vorrichtung nach einem der Ansprüche 1 bis 4, wobei die Lademittel (300) zumindest eine Wicklung (310) mit zwei Hauptenden, erstes Ende (311a) und zweites Ende (311b) genannt, aufweisen, wobei die zumindest eine Wicklung dazu bestimmt ist, magnetisch mit dem Kabel (500a) gekoppelt zu werden, sobald ein Zusammenwirken zwischen dem mechanischen Kopplungsmittel (330) und dem Kabel (500a) erfolgt, um durch Induktion das Fließen eines Stroms, induzierter Strom genannt, in der zumindest einen Wicklung (310) zu bewirken, und dazu bestimmt ist, die zumindest eine Batterie (200) aufzuladen.

6. Vorrichtung nach Anspruch 5 und Anspruch 2, wobei die zumindest eine Wicklung (310) den Haken bildet.

7. Vorrichtung nach Anspruch 5 und Anspruch 3, wobei die zumindest eine Wicklung (310) zumindest eine der Backen der Klammer bildet.

8. Vorrichtung nach einem der Ansprüche 5 bis 7, wobei die Lademittel (300) einen Stromgleichrichter (320) aufweisen, der dazu angeordnet ist, den induzierten Strom in einen Strom mit Gleichstromkomponente, Ladestrom genannt, gleichzurichten, bevor er in die zumindest eine Batterie (200) eingespeist wird.

9. Vorrichtung nach Anspruch 8, wobei der Gleichrichter zumindest eine Diode aufweist, wobei der Gleichrichter vorteilhaft zwei Dioden aufweist und wobei der Gleichrichter noch vorteilhafter eine Anordnung von Dioden aufweist, die eine Graetz-Brücke bilden.

10. Vorrichtung nach einem der Ansprüche 5 bis 9, wobei die Lademittel (300) Kurzschlussmittel (340) aufweisen, die dazu angeordnet sind, die Lademittel (300) kurzzuschließen, wobei die Kurzschlussmittel (340) vorteilhaft dazu ausgelegt sind, die Lademittel (300) kurzzuschließen, sobald die zumindest eine Batterie (200) im Laufe einer Ladephase eine Ladung erreicht hat, die zumindest gleich einer vorbestimmten Ladung ist, wobei noch vorteilhafter die vorbestimmte Ladung einer vollständigen Ladung der zumindest einen Batterie (200) entspricht.

11. Vorrichtung nach einem der Ansprüche 5 bis 10, wobei Kurzschlussmittel (340) zum Kurzschließen der zumindest einen Wicklung (310) angeordnet sind.

12. Vorrichtung nach Anspruch 11 und Anspruch 8, wobei die Kurzschlussmittel (340) dazu angeordnet sind, den Stromgleichrichter (320) kurzschließen, wobei vorteilhafterweise die Lademittel (300) eine Diode aufweisen, die verhindern soll, dass ein Entladestrom der Batterie (200) in die Kurzschlussmittel (340) fließt, sobald der Stromgleichrichter (320) kurzgeschlossen ist.

13. Vorrichtung nach einem der Ansprüche 5 bis 12, wobei die Lademittel (300) Regelungsmittel (360) zum Begrenzen des Ladestroms aufweisen, wobei vorteilhafterweise die Regelungsmittel (360) dazu ausgelegt sind, eine Zerhackung von dem einen oder anderen aus induziertem Strom und Ladestrom durchzuführen.

## Claims

1. An electrically propelled flying device (100) comprising:
- a mechanical coupling means (330) arranged to cooperate with a cable (500a) of an electric distribution line (500) so as to hold the flying device integral with the cable (500a) in a rest position;
- at least one rechargeable battery (200) for supplying power necessary to electrically propel the flying device;
- means for charging (300) the at least one battery (200) included in the mechanical coupling means (330), the charging means (300) being adapted, as soon as a so-called line current passes through the cable (500a), to cooperate, advantageously magnetically, with said cable (500a) in order to charge the at least one battery (200), **characterised in that** the charging means (300) are disposed in a Faraday cage (380) provided with an electrode (390) arranged to be in contact with the cable (500a) as soon as the flying device (100) is hooked to the cable (500a), advantageously the electrode (390) is disposed at the mechanical coupling means (330).

2. The device according to claim 1, wherein the mechanical coupling means (330) comprises a hook for hooking, advantageously in suspension, the flying device (100) to the cable (500a).

3. The device according to claim 1, wherein the mechanical coupling means comprises a clamp provided with at least two clamp grippers to hook the flying device (100) to the cable (500a).

4. The device according to one of claims 1 to 3, wherein the coupling means (330) is fitted with a rolling means arranged to enable the flying device (100) to be moved along the cable (500a) of the distribution line.

5. The device according to one of claims 1 to 4, wherein the charging means (300) comprise at least one winding (310) having two main ends called a first end (311a) and a second end (311b) respectively, the at least one winding being arranged to be magnetically coupled with the cable (500a) as soon as a cooperation between the mechanical coupling means (330) and the cable (500a) occurs so as to inductively cause a so-called induced current, to flow in the at least one winding (310) and for charging the at least one battery (200).

6. The device according to claim 5 and claim 2, wherein the at least one winding (310) forms the hook.

7. The device according to claim 5 and claim 3, wherein the at least one winding (310) forms at least one of the grippers of the clamp.

8. The device according to one of claims 5 to 7, wherein the charging means (300) comprise a current rectifier (320) arranged to rectify the induced current into a DC component current, called a charging current, before being injected into the at least one battery (200).

9. The device according to claim 8, wherein the rectifier comprises at least one diode, advantageously the rectifier comprises two diodes, still more advantageously, the rectifier comprises a diode arrangement forming a Graetz bridge.

10. The device according to one of claims 5 to 9, wherein the charging means (300) comprise short-circuiting means (340) adapted to short-circuit the charging means (300), advantageously the short-circuiting means (340) are adapted to short-circuit the charging means (300) as soon as the at least one battery (200), during a charging phase, has reached a charge at least equal to a predetermined charge, still more advantageously, the predetermined charge corresponds to a full charge of the at least one battery (200).

11. The device according to one of claims 5 to 10, wherein the short-circuiting means (340) are arranged to short-circuit the at least one winding (310).

12. The device according to claim 11 and claim 8, wherein the short-circuiting means (340) are arranged to short-circuit the current rectifier (320), advantageously the charging means (300) comprise a diode arranged to prevent a discharging current of the battery (200) from flowing in the short-circuiting means (340) as soon as the current rectifier (320) is short-circuited.

13. The device according to claims 5 to 12, wherein the charging means (300) comprise regulating means (360) for limiting the charging current, advantageously the regulating means (360) are adapted to perform chopping of either of the induced and charging currents.
